# FASCICULE DE BREVET EUROPEEN

(11) **EP 1 695 611 B1**
(45) Date de publication et mention de la délivrance du brevet: **18.11.2009**
(21) Numéro de dépôt: 06290340.6
(22) Date de dépôt: 27.02.2006
(51) Int. Cl.: A01D 34/86, E02F 9/14

(54) **Machine de fauchage/débroussaillage et d'élagage à bras articulé comprenant un tronçon amovible**
Mäh-, Freischneid-, und Beschneidungsmaschine mit einem Gelenkarm umfassend einen abnehmbaren Abschnitt
Mowing, clearing and pruning machine with an articulated arm comprising a detachable section

(30) Priorité: 25.02.2005 FR 0501977
(43) Date de publication de la demande: 30.08.2006
(73) Titulaire: Signalisation Moderne Autoroutière SMA, 45590 Saint Cyr en Val (FR)
(72) Inventeur: Groud, Laurent, 89290 Champs sur Yonne (FR)
(74) Mandataire: Chameroy, Claude

(56) Documents cités:
- EP-A- 1 312 251
- EP-A- 1 364 572
- DD-A- 41 002
- US-A1- 2004 165 978

## Description

La présente invention concerne une machine de fauchage/débroussaillage et d'élagage comprenant un véhicule, un bâti attelé au véhicule, un bras articulé monté pivotant sur le bâti, et comprenant une flèche et un balancier, ainsi qu'un outil de coupe orientable monté à l'extrémité libre du balancier, telle que décrite dans le document EP-A1-1364572.

La plupart des machines de fauchage/débroussaillage et d'élagage actuelles comportent un bras articulé permettant à l'outil de coupe de travailler dans des zones très éloignées du véhicule.

Pour répondre à ce problème, on a récemment proposé une gamme de machines de fauchage/débroussaillage à bras articulé dont un tronçon est à longueur réglable par coulissement actionné par un vérin hydraulique.

L'accroissement de la portée du bras articulé impose toutefois aux constructeurs d'augmenter considérablement l'encombrement des machines.

Cette exigence contraint actuellement les utilisateurs à refuser des travaux pour lesquels l'encombrement important de la machine rend impossible l'accès au chantier lorsque celui-ci est exigu.

La présente invention se propose de remédier à cet inconvénient et, pour ce faire, elle a pour objet une machine de fauchage/débroussaillage et d'élagage ayant la structure indiquée au premier paragraphe ci-dessus et qui est caractérisée par la partie caractérisante de la revendication 1.

Ce montage particulier assure un positionnement relatif précis des deux tronçons adjacents, et il permet l'utilisation de l'outillage conventionnel du mécanicien agricole et de l'entrepreneur de travaux agricoles.

Selon un mode de réalisation préféré, un premier type de tronçon amovible comporte une articulation permettant un mouvement supplémentaire du bras articulé, et un vérin hydraulique double effet pour actionner cette articulation.

Selon un autre mode de réalisation préféré, un deuxième type de tronçon amovible comporte un réglage de sa longueur par un système de coulissement en translation avec un vérin hydraulique double effet permettant un réglage supplémentaire de la longueur du bras articulé.

Ce dispositif confère à la machine une modularité et une meilleure adaptabilité au type de chantier.

Un mode d'exécution de la présente invention sera décrit ci-après à titre d'exemple nullement limitatif en référence aux dessins annexés dans lesquels :

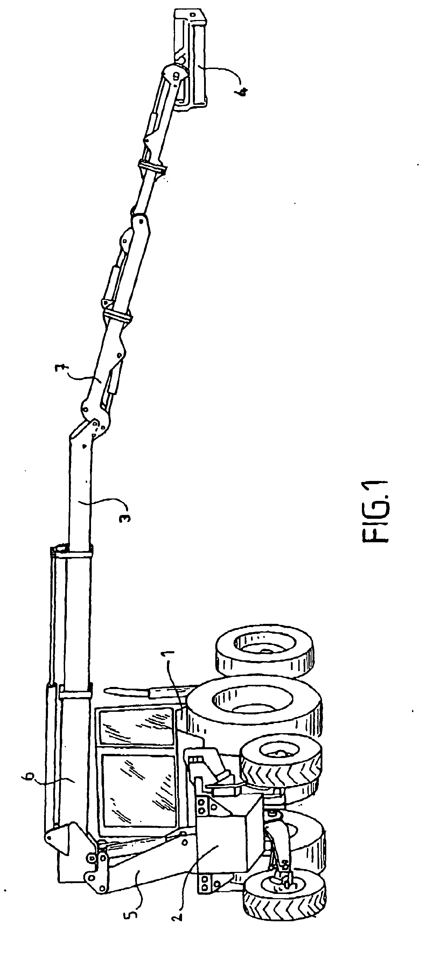

- la figure 1 est une vue en perspective schématique prise de l'arrière d'une machine selon l'invention ;
- la figure 2 est une vue partielle de la machine visible sur la figure 1, cette vue montrant la constitution du balancier en trois tronçons ;
- la figure 3 est une vue en perspective schématique et partielle montrant l'assemblage de deux tronçons du balancier;
- la figure 4 est une vue en perspective schématique de l'extrémité d'un tronçon après démontage du tronçon voisin ;
- la figure 5 est une vue en perspective schématique prise de l'arrière de la machine après démontage du tronçon central.

La machine que l'on peut voir sur les dessins permet de réaliser des opérations de fauchage/débroussaillage et d'élagage dans des endroits très divers, bien qu'elle soit plus particulièrement destinée à l'entretien des accotements des routes et autres voies de circulation.

Elle comprend un véhicule 1, un bâti 2 relié rigidement à l'arrière du véhicule, un bras articulé 3 monté pivotant sur le bâti 2, et un outil de coupe orientable 4 monté à l'extrémité libre du bras articulé 3.

Dans le mode de réalisation représenté, le bras articulé 3 est constitué d'un bloc pivotant 5, d'une flèche télescopique 6 et d'un balancier 7.

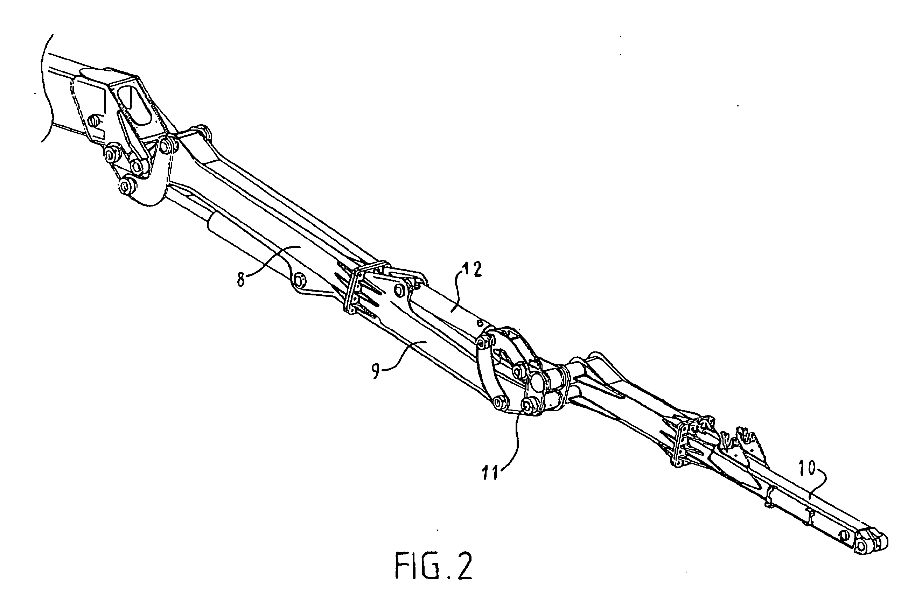

Selon l'invention, le balancier 7 est un assemblage de trois tronçons 8, 9 et 10, comme le montre la figure 2. Le tronçon 8 situé côté flèche est fixé au tronçon central 9, qui est lui-même fixé au tronçon 10 situé côté outil. Le tronçon central est ici montré équipé d'une articulation 11 actionnée par un vérin hydraulique 12 ; cette articulation supplémentaire permet d'augmenter la portée de travail de l'outil installé à l'extrémité du bras articulé.

Dans un autre mode de réalisation, le tronçon central 9 peut être équipé d'un système de coulissement avec vérin hydraulique pour le rendre extensible et permettre un réglage supplémentaire de la longueur du bras articulé.

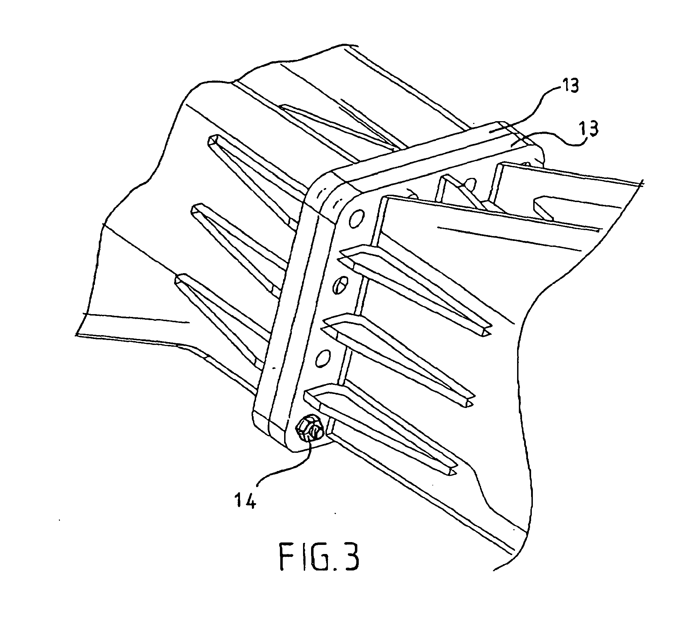

L'assemblage de deux tronçons adjacents est du type liaison rigide démontable. La figure 3 montre l'assemblage entre deux platines 13 solidaires de l'extrémité de chaque tronçon et sensiblement perpendiculaires à leur longueur, par plusieurs boulons 14 installés à la périphérie de ces platines.

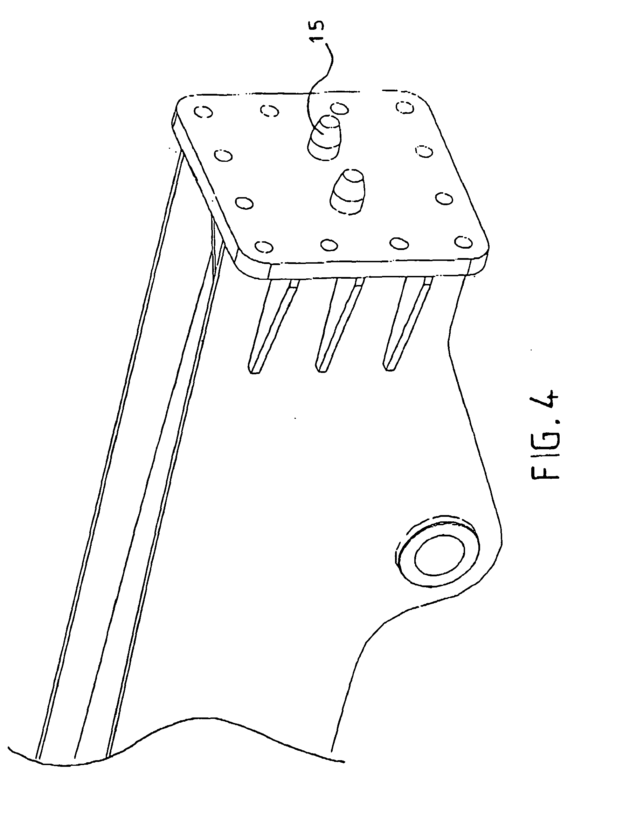

Pour faciliter le bon positionnement relatif de deux platines contigües, l'une d'elles, montrée sur la figure 4, est équipée de deux pions de centrage 15, cylindriques et parallèles, qui sont engagés, lors de chaque assemblage, dans deux alésages correspondants usinés dans l'autre platine. Cette disposition assure à l'utilisateur l'obtention d'une géométrie correcte à chaque remontage.

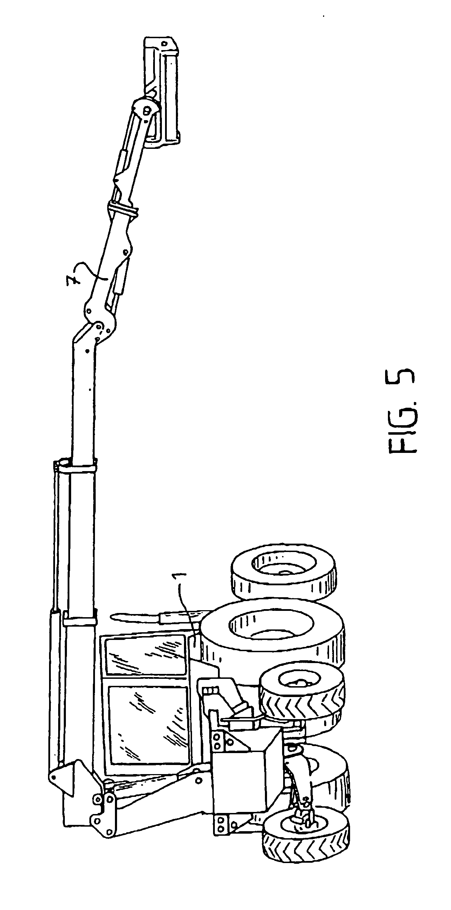

La figure 5 représente la machine après que le tronçon central 9, précédemment montré sur la figure 2, ait été démonté pour raccourcir le balancier 7, et ce faisant, réduire l'encombrement de la machine.

## Revendications

1. Machine pour effectuer des travaux de fauchage/débroussaillage et d'élagage, comprenant un véhicule (1), un bâti (2) attelé au véhicule, un bras articulé (3) monté pivotant sur le bâti et comprenant une flèche (6) et un balancier (7), ainsi qu'un outil de coupe orientable (4) monté à l'extrémité libre du balancier (7), **caractérisée en ce que** le balancier comprend, entre son extrémité articulée côté flèche et son extrémité articulée côté outil, trois tronçons (8, 9, 10) assemblés bout à bout par des liaisons rigides démontables et dont le tronçon central (9) peut être ajouté ou enlevé afin de modifier l'encombrement et la géométrie du bras articulé (3), et **en ce que**, chaque liaison rigide comprend une platine (13) qui est prévue à l'extrémité de chacun des tronçons destinés à être juxtaposés, et qui est perpendiculaire à la longueur de ceux-ci, les deux platines d'une même liaison rigide étant destinées à être positionnées l'une par rapport à l'autre par deux pions de centrage cylindriques (15) parallèles à la longueur du tronçon central (9), et à être assemblées par plusieurs boulons (14) répartis à leur périphérie ;

2. Machine selon la revendication 1, **caractérisée en ce que** le tronçon amovible (9) comporte une articulation (11) permettant un mouvement supplémentaire du bras articulé (3), et un vérin hydraulique (12) pour actionner cette articulation ;

3. Machine selon la revendication 1, **caractérisée en ce que** le tronçon amovible (9) comporte un réglage de sa longueur par un système de coulissement en translation avec un vérin hydraulique double effet permettant un réglage supplémentaire de la longueur de bras articulé.

## Claims

1. Machine for carrying out mowing/clearing and pruning work, comprising a vehicle (1), a frame (2) attached to the vehicle, an articulated arm (3) pivotably mounted on the frame and comprising a boom (6) and a balance beam (7), and an adjustable cutting tool (4) mounted at the free end of the balance beam (7), **characterised in that** the balance beam comprises, between its articulated end on the boom side and its articulated end on the tool side, three sections (8, 9, 10) assembled end to end by means of detachable rigid connections, the central section (9) of which can be added or removed in order to modify the overall dimensions and geometry of the articulated arm (3), and **in that** each rigid connection comprises a plate (13) provided at the end of each of the sections intended to be juxtaposed and perpendicular to the length thereof, the two plates of one single rigid connection being intended to be positioned relative to one another by means of two cylindrical centring pins (15) parallel to the length of the central section (9) and to be assembled by means of a plurality of bolts (14) distributed around the periphery thereof.

2. Machine according to claim 1, **characterised in that** the removable section (9) includes an articulation (11) allowing for additional movement of the articulated arm (3) and a hydraulic cylinder (12) for activating this articulation.

3. Machine according to claim 1, **characterised in that** the removable section (9) includes length adjustment by means of a translational sliding system with a double-acting hydraulic cylinder allowing for additional adjustment of the length of the articulated arm.

## Patentansprüche

1. Maschine zur Durchführung von Mäh- /Gestrüppentfernungs- und Ausästarbeiten, mit einem Fahrzeug (1), einem am Fahrzeug gekuppelten Gestell (2), einem Gelenkarm (3), der drehbar am Gestell gelagert ist und einen Ausleger (6) und einen Schwenkhebel (7) umfasst, und einem am freien Ende des Schwenkhebels (7) angebrachten lenkbaren Schneidewerkzeug (4), **dadurch gekennzeichnet, dass** der Schwenkhebel, zwischen seinem auslegerseitig angelenkten Ende und seinem werkzeugseitig angelenkten Ende, drei Abschnitte (8, 9, 10) umfasst, die mittels ausbaubaren starren Verbindungen aneinandergefügt sind, wobei der mittlere Abschnitt (9) zur Änderung des Raumbedarfs und der Geometrie des Gelenkarmes (3) hinzugefügt oder entfernt werden kann, und dass jede starre Verbindung eine Grundplatte (13) umfasst, die am Ende der jeweiligen zum Nebeneinanderfügen bestimmten Abschnitte vorgesehen ist und die senkrecht zur Länge letzterer steht, wobei die beiden Grundplatten einer starren Verbindung dazu bestimmt sind, mittels zwei zylinderförmigen Zentrierbolzen (15) zueinander positioniert zu werden, die parallel zur Länge des mittleren Abschnittes (9) angeordnet sind, und durch mehrere an ihrem Umfang verteilt angeordnete Bolzen (14) zusammengebaut zu werden.

2. Maschine nach Anspruch 1, **dadurch gekennzeichnet, dass** der abnehmbare Abschnitt (9) ein Gelenk (11) aufweist, das eine zusätzliche Bewegung des Gelenkarmes (3) ermöglicht, sowie einen Arbeitszylinder (12) zur Betätigung des Gelenkes.

3. Maschine nach Anspruch 1, **dadurch gekennzeichnet, dass** der mittlere Abschnitt (9) eine Einstellung seiner Länge mittels eines Schiebegleitsystems aufweist, mit einem doppeltwirkenden Arbeitszylinder, der eine zusätzliche Einstellung der Länge des Gelenkarmes ermöglicht.
